(19) Europäisches Patentamt
European Patent Office
Office européen des brevets

(11) **EP 1 801 636 B1**

(12) **EUROPEAN PATENT SPECIFICATION**

(45) Date of publication and mention
of the grant of the patent:
**08.10.2008 Bulletin 2008/41**

(51) Int Cl.:
*G02B 3/00* (2006.01)     *G02B 5/18* (2006.01)
*G02F 1/1335* (2006.01)

(21) Application number: **05780224.1**

(22) Date of filing: **12.08.2005**

(86) International application number:
**PCT/JP2005/014833**

(87) International publication number:
**WO 2006/027934 (16.03.2006 Gazette 2006/11)**

(54) **TRANSLUSCENT DISPLAY PANEL AND METHOD FOR MANUFACTURING THE SAME**

DURCHSICHTIGE ANZEIGETAFEL UND VERFAHREN ZU IHRER HERSTELLUNG

ECRAN D'AFFICHAGE TRANSLUCIDE ET PROCEDE DE FABRICATION DE CELUI-CI

(84) Designated Contracting States:
**DE FR GB**

(30) Priority: **10.09.2004 JP 2004264237**

(43) Date of publication of application:
**27.06.2007 Bulletin 2007/26**

(73) Proprietor: **Sumitomo Electric Industries, Ltd.
Osaka-shi, Osaka 541-0041 (JP)**

(72) Inventors:
• **USHIRO, Toshihiko
Itami-shi,
Hyogo 6648611 (JP)**
• **ODA, Kazuhiko
Itami-shi,
Hyogo 6648611 (JP)**
• **MATSUURA, Takashi
Itami-shi,
Hyogo 6648611 (JP)**

(74) Representative: **HOFFMANN EITLE
Patent- und Rechtsanwälte
Arabellastrasse 4
81925 München (DE)**

(56) References cited:
EP-A- 0 516 479          EP-A- 0 615 150
JP-A- 6 003 670          JP-A- 7 005 303
JP-A- 8 179 300          JP-A- 8 271 878
JP-A- 60 123 803         JP-A- 2000 131 520
JP-A- 2001 117 114       JP-A- 2004 004 745

• ZHANG G F ET AL: "STUDIES ON DIAMONDLIKE CARBON FILMS FOR ANTIREFLECTION COATINGS OF INFRARED OPTICAL MATERIALS" JOURNAL OF APPLIED PHYSICS, vol. 76, no. 2, 15 July 1994 (1994-07-15), pages 705-707, XP002449034
• BRICCHI E ET AL: "Maskless fresnel zone plates for dense embedded optical components" CONFERENCE ON LASERS AND ELECTRO-OPTICS. (CLEO 2002). TECHNICAL DIGEST. POSTCONFERENCE EDITION. LONG BEACH, CA, MAY 19 - 24, 2002, TRENDS IN OPTICS AND PHOTONICS. (TOPS), WASHINGTON, WA : OSA, US, vol. VOL. 73, 19 May 2002 (2002-05-19), pages 77-78, XP010606455 ISBN: 1-55752-706-7
• HAMBLEN D P: "DIFFRACTIVE OPTICS: THE GRADIAL ZONE LENS" OPTICS LETTERS, OSA, OPTICAL SOCIETY OF AMERICA, WASHINGTON, DC, US, vol. 19, no. 21, 1 November 1994 (1994-11-01), pages 1687-1689, XP000475837 ISSN: 0146-9592

**Description**

**Technical Field**

The present invention relates to a transmission type of display panel such as a liquid crystal display panel, and particularly to improvement in display brightness of the transmission type of display panel.

**Background Art**

Conventionally, a cathode ray tube (CRT) has mainly been used as a display device. In recent years, however, the CRT has been replaced with a flat type of display device. The flat type of display device can roughly be classified into a light emitting type and a light receiving type. As the light emitting type, there have been known a plasma display, an electroluminescent display, a light emitting diode display and others. As the light receiving type, there have been known a liquid crystal display, an electrochromic display, an electro-optic crystal display, an electrophoretic display and others.

The light receiving type of display device does not emit light in itself, and thus has a problem of low display brightness that makes it difficult to clearly view the displayed image. To solve this problem, therefore, many display devices of the light receiving type are each provided with a backlight. In this case, the light receiving type of display device includes a transmission type of display panel, and makes a display image by controlling transparency of each pixel. In order to control transparency of each pixel, the display panel includes electrode bands and switching elements arranged in lengthwise and crosswise directions.

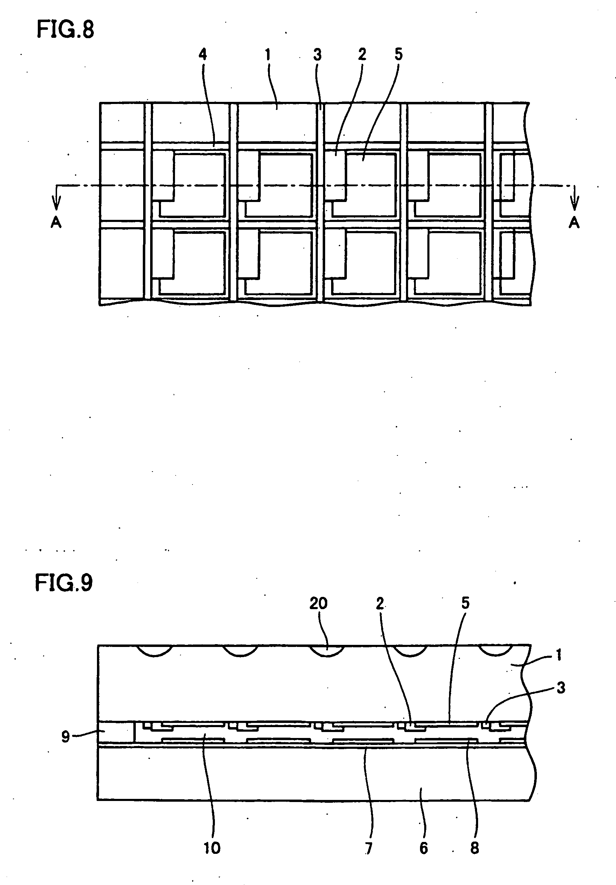

Fig. 8 is a schematic plan view showing an arrangement of electrode bands and switching elements in a liquid crystal display panel disclosed in Patent Document 1: Japanese Patent application JP 60-165621. In the liquid crystal display panel, amorphous silicon thin-film transistors (TFTs) 2 serving as switching elements, drain metal electrodes 3, gate metal electrodes 4, and pixel electrodes 5 of transparent conductive oxide are generally arranged on a glass substrate 1, as shown in this drawing.

Fig. 9 is a schematic cross section of the liquid crystal display panel, taken along a line A-A in Fig. 8, which includes the arrangement of the electrode bands and the switching elements. In this drawing, a first glass substrate 1 is placed to face a common electrode 7 of a transparent oxide provided on an entire surface of a second glass substrate 6. On common electrode 7, color filters 8 are arranged in positions corresponding to pixel electrodes 5. Color filters 8 include red, green and blue filters, and these three color filters are arranged periodically. A liquid crystal layer 10 is inserted between the first and second glass substrates 1 and 6 facing each other, and the periphery thereof is sealed with epoxy resin 9.

According to Patent Document 1, an array of microlenses 20 each serving as a concave lens is formed at an upper surface of first glass substrate 1 in Fig. 9. These microlenses 20 are disposed in regions above pairs of TFT 2 and drain electrode 3. A ray of backlight advancing straight from above in Fig. 9 toward a region including TFT 2 and drain electrode 3 has its path bent by microlens 20 serving as a concave lens, and is directed to a region of pixel electrode 5. In other words, rays of backlight that would be blocked by TFTs 2 and drain electrodes 3 in the case of no microlenses 20 can be delivered into the regions of transparent pixel electrodes 5 whereby improving display brightness of the liquid crystal display panel.

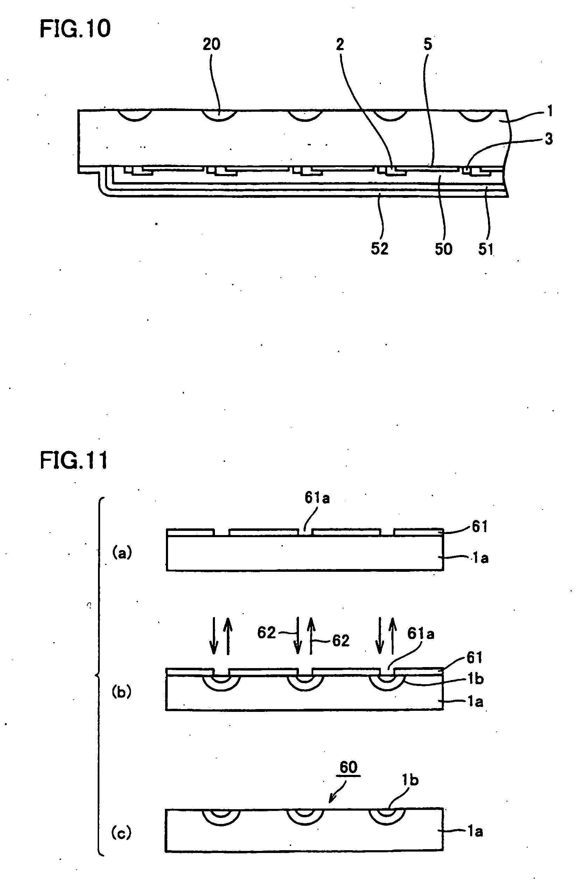

Fig. 10 shows a schematic cross section of an electrochromic display panel disclosed in Patent Document 1. This display panel also includes TFTs 2, drain electrodes 3, and transparent pixel electrodes 5 arranged on glass substrate 1, similarly as in the case of the display panel of Fig. 9. However, TFTs 2, drain electrodes 3, and transparent pixel electrodes 5 are covered, not with a liquid crystal layer, but with a tungsten oxide layer 50 serving as an electrochromic material layer. A magnesium fluoride layer 51 serving as an ion conduction layer and then a transparent common electrode layer 52 are formed on tungsten oxide layer 50.

In the electrochromic display panel also, an array of microlenses 20 each serving as a concave lens is formed on the upper surface of glass substrate 1. A ray of backlight advancing straight from above in Fig. 10 toward a region including TFT 2 and drain electrode 3 has its path bent by microlens 20 serving as a concave lens, and is directed into a region of pixel electrode 5. As such, display brightness of the electrochromic display panel can also be improved.

As described above, in order to obtain the transmission type of display panel having its improved display brightness, it is necessary to fabricate a flat plate type of microlens array in a glass substrate.

Figs. 11 (a)-(c) illustrate an example of a method of fabricating a flat plate type of microlens array, in schematic cross sections. In Fig. 11(a), a metal resist layer 61 having pores 61a arranged in an array is formed on a glass substrate 1a by photolithography and etching. In Fig. 11(b), high refractive index regions 1 b are formed through pores 61a of resist layer 61 by a well-known ion exchange method, i.e., ion exchange as represented by pairs of arrows 62 opposite to each other. At this time, the ion exchange proceeds by isotropic thermal diffusion of ions, and thus high refractive index region 1b is naturally formed into an approximately hemispheric shape in glass substrate 1a. Metal resist layer 61, of course, must have heat resistance withstanding a temperature of the thermal diffusion as well as a function of blocking passage of the ions. In Fig. 11(c), resist layer 61 is removed and a flat plate type of microlens array 60 is obtained.

Such a microlens utilizes a photorefractive phenomenon and thus is a refraction type of microlens. A lens having a refractive index distribution within a transparent substrate may also be referred to as a GRIN (graded index) lens.

Conventionally, the refraction type of microlens has mainly been used as a microlens. In recent years, however, a diffraction type of microlens has received attention from a viewpoint of reduction in size, weight, cost and others of an optical system. The diffraction type of microlens utilizes a light diffraction phenomenon to cause a lens function. The diffraction type of microlens can roughly be classified into a relief type (or film thickness modulated type) microlens and a refractive index modulated type of microlens. The relief type of microlens typically has a structure in which a plurality of minute, concentric, ring-like grooves are formed on a surface of a transparent substrate, and depths of these grooves (i.e., thicknesses of the substrate) are periodically modified. In contrast, the refractive index modulated type of microlens typically has a structure in which a flat plate-like substrate is divided into a plurality of minute, concentric, band-like ring regions, and refractive indices of these regions are periodically modified.

The periodic modification in thickness or in refractive index of the transparent substrate causes periodic modification in phase of light passing through the substrate, and then causes a light diffraction effect similarly as in the case of a diffraction grating. As the grating pitch of the diffraction grating is decreased, the diffraction angle of light passing through the diffraction grating is increased. By decreasing the pitch of concentric diffraction grating according as increase of distance from the center to the periphery of concentric circles, therefore, it is possible to converge light passing through the diffraction grating, similarly as in the case of a convex lens.

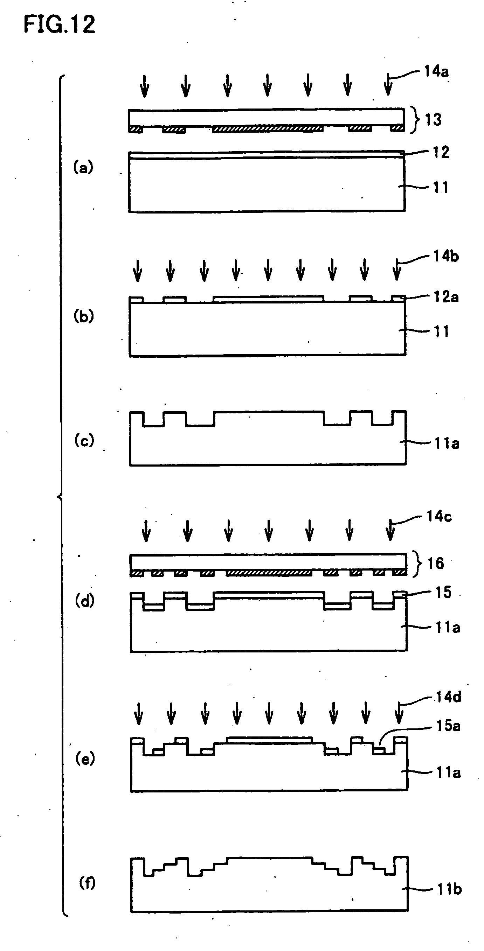

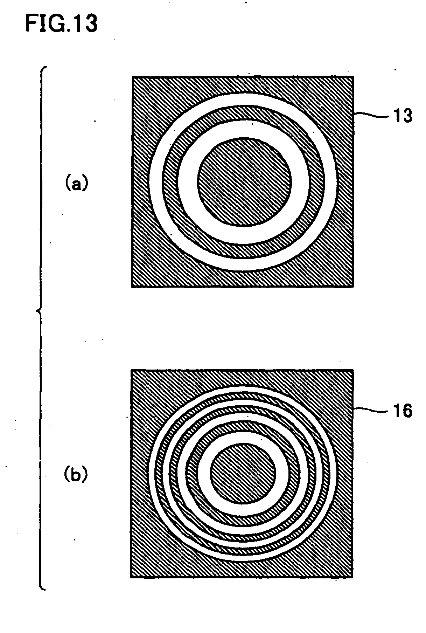

Fig. 12 illustrates an example of a method of fabricating a conventional relief-type microlens, in schematic cross sections (Non-Patent Document 1: "Technique of Ultraprecision Machining and Mass Production of Microlens (Array)" published by TECHNICAL INFORMATION INSTITUTE CO, LTD., April 28, 2003, pages 20-21 and 71-81). Fig. 13 shows, in schematic plan views, exposure masks for use in the fabrication method shown Fig. 12, each of which has a similar pattern as in a well-known Fresnel zone plate.

In Fig. 12(a), a positive-type photoresist layer 12 is formed on an Si substrate 11, and ultraviolet light 14a is applied thereto through a first photomask 13. First photomask 13 has concentric, band-like, ring patterns as shown in Fig. 13(a), and the pitch between the rings is decreased according as increase of distance from the center to the periphery of the concentric circles. Although only two transparent rings are shown in Fig. 13(a) for clarity and simplicity of the drawing, it goes without saying that more rings may be included as a matter of fact.

In Fig. 12(b), exposed resist layer 12 is developed to form a first resist pattern 12a. Band-like groove rings each having a prescribed depth are formed through reactive ion etching (RIE) represented by arrows 14b with use of first resist pattern 12a as a mask

In Fig. 12(c), first resist pattern 12a is removed to obtaine a relief-type microlens 11 a with a binary level (the phase of light is modulated in two levels). The width and the depth of each of the band-like groove rings are set such that the most preferable diffraction efficiency is obtained in the two-level or multi-level, relief-type microlens.

Figs 12(d)-(f) illustrate a process of fabricating a four-level, relief-type microlens, after a process similar to that of Figs. 12(a)-(c).

In Fig. 12(d), a second resist layer 15 is further formed on an upper surface of Si substrate 11a that has been formed through a process similar to that up to Fig. 12(c), and ultraviolet light 14c is applied thereto through a second mask 16. Fig. 13(b) shows second mask 16 in a schematic plan view. As seen from Figs. 13(a) and (b), second mask 16 has twice as many band-like transparent rings as first mask 13 has. In other words, the band-like transparent ring and the band-like non-transparent ring in the second mask have widths approximately one-half of those of the band-like transparent ring and the band-like non-transparent ring in the first mask, respectively.

In Fig. 12(e), exposed second resist layer 15 is developed to form a second resist pattern 15a as shown in the drawing. Etching is further carried out to a prescribed depth through RIE represented by arrows 14d with use of second resist pattern 15a as a mask.

In Fig. 12(f), second resist pattern 15a is removed to obtain a relief-type microlens 11b that can cause four-level phase variations. Higher diffraction efficiency and higher light convergence efficiency are obtained in a multi-level, diffraction-type lens than in a two-level, diffraction-type lens. The N times repetitions of the above-described process of photolithography and RIE make it possible to fabricate a $2^N$-level, relief-type microlens. Theoretically, a diffraction efficiency of 100% can be obtained with a diffractive lens having an infinite number of levels. However, such a lens requires an increased number of fabrication processes and increase in cost, and thus an eight-level, diffraction-type lens that can cause a diffraction efficiency of 95% is sufficient in practice (this can be fabricated by repeating the above-described process N=3 times).

Patent Document 1: Japanese Patent application JP 60-165621

Non-Patent Document 1: "Technique of Ultraprecision Machining and Mass Production of Microlens (Array)" published by TECHNICAL INFORMATION INSTITUTE CO, LTD., April 28, 2003, pages 20-21 and 71-81

The Article "Studies on diamondlike carbon films for antireflection coatings of infrared optical materials" by G.

F. Zhang Et Al, published in the journal of applied physics 76 (2) on July 15, 1994 relates to the effects of diamondlike carbon films.

EP 0 516 479 A2 describes a projection-type liquid crystal display apparatus in accordance with the preamble of claim 1.

EP 0 615 150 A2 is related to a cover glass for LCD panel having an array of microlenses which may provided a gradient refractive index in the grass.

"Diffractive Optics: The gradial zone lens" by David P. Hamblen, published in 2412 Optics Letter 19 (1994) on November 1, describes a gradial zone lens having a diffractive component.

Finally, JP 60 123803 is related to a microfrasenel lens having a higher refractive index than a colorless transparent substrate thereupon.

**Disclosure of the Invention**

**Problems to be Solved by the Invention**

As to the refraction-type microlens array formed by ion exchange in the glass substrate as illustrated in Fig. 11, the refractive index variation $\Delta n$ that can be increased by the ion exchange is merely approximately 0.17. Owing to such a relatively small difference in refractive index, it is difficult to fabricate a lens having a short focal distance. Furthermore, ion-exchanged region 1b is formed by isotropic thermal diffusion, and thus lens region 1b is always formed into an approximately hemispheric shape, which makes it difficult to modify the thickness of the lens to adjust the focal distance.

In the case that the diffraction-type microlens is a relief-type microlens, grooves must be carved by etching in a transparent substrate and thus the substrate should have a large thickness enough to allow the groove carving. Furthermore, it is not easy to precisely adjust the depth of the grooves to be carved by etching. Additionally, the relief-type microlens has minute concavities and convexities on its surface, and thus there is also a problem that dusts and contaminants tend to attach the lens.

On the other hand, it is difficult to fabricate the diffraction-type microlens as a refractive index modulated type of microlens. This is because the refractive index variation $\Delta n$ obtained by the ion exchange in the glass plate is at most approximately 0.17 as described above, and thus it is difficult to form an effective, refractive index modulated type of diffraction grating. Although it is also known that the refractive index of silica-based glass can also be increased by application of an energy beam such as ultraviolet light, the refractive index variation in that case ($\Delta n$ is less than about 0.01) is much smaller than that in the case of ion exchange.

As described above, with use of the microlens array according to the prior art, it is not easy to provide a transmission-type display panel having sufficiently improved display brightness, in a simple manner and at a low cost. In view of the circumstances in the prior art, an object of the present invention is to provide a transmission-type display panel that includes a flat plate type of microlens array mechanically and thermally stable and has sufficiently improved display brightness, in a simple manner and at a low cost.

**Means for Solving the Problems**

A transmission-type display panel according to the present invention is defined in claim 1 of the appended claims.

A refractive-type lens region having a relatively high refractive index can be formed corresponding to each of the microlenses on one main surface side of the DLC film. The lens region has a shape of a convex lens surrounded by the one main surface of the DLC film and an interface equivalent to a part of an approximately spherical surface. The lens region may have a columnar convex lens surrounded by the one main surface of the DLC film and an interface equivalent to a portion of an approximately cylindrical surface having a central axis parallel to the main surface.

Furthermore, the lens region may have an approximately cylindrical shape penetrating the DLC film. In this case, a central axis of the cylindrical shape is orthogonal to the DLC film, and the refractive index is set to be higher as closer to the central axis. Furthermore, the lens region may be a band-like region penetrating the DLC film. In this case, the refractive index is set to be higher as closer to a plane that is orthogonal to the DLC film and extends through the center of a width direction of the band-like region.

The DLC film may include a plurality of band-like ring regions in a manner of concentric circles for each of the microlenses. In this case, the band-like ring regions have their refractive indices modulated to serve as a diffraction grating. The band-like ring regions placed farther from the center of the concentric circles have smaller widths.

The DLC film may include "m" concentric ring zones for each of the microlenses. In this case, each of the ring zones includes "n" band-like ring regions. Inner one of the band-like ring regions has a higher refractive index compared with outer one of the band-like ring regions in each of the ring zones. The band-like ring regions placed corresponding to each other in different ones of the ring zones have the same refractive index.

The DLC film may include a plurality of band-like regions parallel to each other for each of the microlenses. In this case, the band-like regions have their refractive indices modulated to serve as a diffraction grating. The band-like regions placed farther from a prescribed band-like region have smaller widths.

The DLC film may include "m" band zones parallel to each other for each of the microlenses. In this case, each of the band zones has "n" band-like regions. The band-like regions placed closer to a prescribed band-like region have higher refractive indices compared with the band-like regions placed farther from the prescribed band-like region in each of the band zones. The band-like regions placed corresponding to each other in different ones of the band zones have the same refractive index.

In the above-described transmission-type display panel, each of the transparency control regions may include a liquid crystal layer or an electrochromic material layer, as a transparency control material layer. In this case, it is preferable that each of the transparency control regions includes a transparency control material layer held on a first main surface side of a glass substrate, and that the DLC film is formed on a second main surface of the glass substrate.

A method for fabricating the transmission-type display panel of the present invention is defined in claim 12 of the appended claims.

**Effects of the Invention**

According to the present invention, it is possible to fabricate a flat plate type of microlens array mechanically and thermally stable, in a simple manner and at a low cost, and then it is possible to provide a transmission-type display panel including such a microlens array and having sufficiently improved display brightness, in a simple manner and at a low cost.

**Brief Description of the Drawings**

Fig. 1 is a schematic cross section showing an example of a transmission-type display panel according to the present invention.

Fig. 2 is a schematic cross section for explaining an optical effect of a microlens array in a transmission-type display panel according to the present invention.

Fig. 3 shows schematic cross sections illustrating a method of fabricating a refraction-type microlens array that can be used for a transmission-type display panel according to the present invention.

Fig. 4 shows schematic cross sections illustrating a method of forming a stamping die that can be used in the method of fabricating the refraction-type microlens array shown in Fig. 3.

Fig. 5(a) is a schematic plan view illustrating a diffraction-type microlens that can be used for the transmission-type display panel according to the present invention, and Fig. 5(b) is a cross section corresponding thereto.

Fig. 6 shows schematic cross sections illustrating an example of a method of fabricating the diffraction-type microlens of Fig. 5.

Fig. 7 is a schematic cross section illustrating another example of the method of fabricating the diffraction-type microlens according to the present invention.

Fig. 8 is a schematic plan view showing an arrangement of electrode bands and switching elements in a liquid crystal display panel disclosed in Patent Document 1.

Fig. 9 is a schematic cross section of the liquid crystal display panel, taken along a line A-A in Fig. 8, which includes the arrangement of the electrode bands and the switching elements.

Fig. 10 is a schematic cross section showing an electrochromic display panel disclosed in Patent Document 1.

Fig. 11 shows schematic cross sections illustrating a method of fabricating a conventional refraction-type microlens array.

Fig. 12 shows schematic cross sections illustrating a method of fabricating a diffraction-type microlens of a relief type disclosed in Non-Patent Document 1.

Fig. 13 shows schematic plan views of masks for use in the method of fabricating the relief-type microlens shown in Fig. 12.

**Description of the Reference Signs**

1, 1a glass substrate, 1b microlens, 2 TFT, 3 drain metal electrode, 4 gate metal electrode, 5 transparent pixel electrode, 6 glass substrate, 7 transparent common electrode, 8 color filter, 9 epoxy resin, 10 liquid crystal layer, 11 silicon substrate, 11 a two-level relief-type microlens, 11b four-level relief-type microlens, 12 first resist layer, 13 first mask, 14a exposure, 14b RIE, 15 second resist layer, 16 second mask, 14c exposure, 14d RIE, 20 microlens, 20a DLC layer, 20b microlens, 21 DLC film, 22 mask layer, 22a concave portion, 23 energy beam, 21a high refractive index region, 21b refractive index modulated region, 21c central axis (center plane), 31 silica substrate, 32 resist pattern, 32a melted resist, 32b resist being etched, 31a silica substrate being etched, 31 b convex portion, 31c stamping die, 40 diffraction-type microlens of a refractive index modulated type, 41 DLC film, Rmn band-like ring region, f focal distance, 42 Ni conductive layer, 43 resist pattern, 44 gold mask layer, 45 energy beam, 41a high refractive index region, 41b low refractive index region, 50 electrochromic material layer, 51 ion conduction layer, 52 transparent common electrode, 60 microlens array, 61 metal mask, 61 a opening, 62 ion exchange, 71 glass substrate, 72 transparent pixel electrode, 73 opaque region, 74 liquid crystal layer, 75 microlens, 76a converged light, 76b transmitted light, 82 DLC film, 82a low refractive index region, 82b high refractive index region, 84 relief-type phase grating mask, 85 KrF laser light, 86 spacer.

## Best Modes for Carrying Out the Invention

Initially, as to formation of a microlens array required for the present invention in a transparent DLC layer, the present inventors have confirmed that the refractive index of a DLC film can be increased by application of an energy beam to the film. Such a DLC film can be formed through plasma chemical vapor deposition (CVD) on a silicon substrate, a glass substrate, a polymer substrate, or other various types of bases. The transparent DLC film obtained through such plasma CVD normally has a refractive index of approximately 1.55.

For the energy beam used for increasing the refractive index of the DLC film, it is possible to use an ultraviolet (UV) ray, an X-ray, synchrotron radiation (SR), an ion beam, an electron beam, or the like. The SR generally includes electromagnetic waves in a wide wavelength range of from ultraviolet light to an X-ray.

For example, injection of He ions at a dose rate of $5 \times 10^{17}/cm^2$ at an acceleration voltage of 800 keV can increase the refractive index variation $\Delta n$ to approximately 0.65. Injection of ions such as of H, Li, B, or C can also increase the refractive index. In addition, application of SR having a spectrum range of 0.1-130 nm can also increase the refractive index variation $\Delta n$ up to approximately 0.65. Furthermore, as to application of UV light, if KrF excimer laser light having a wavelength of 248 nm, for example, is applied at an irradiation density of 160 mW/mm$^2$ per pulse at a period of 100 Hz, the refractive index variation $\Delta n$ can be increased to approximately 0.22. It is noted that application of ArF (193 nm), XeCl (308 nm), XeF (351 nm), or the like excimer laser light, or Ar laser light (488 nm) can similarly increase the refractive index. The refractive index variation of the DLC film caused by application of an energy beam is found to be significantly larger than that ($\Delta n = 0.17$ at most) of glass caused by the conventional ion exchange, or than that (approximately less than $\Delta n = 0.01$) of silica-based glass caused by application of UV light.

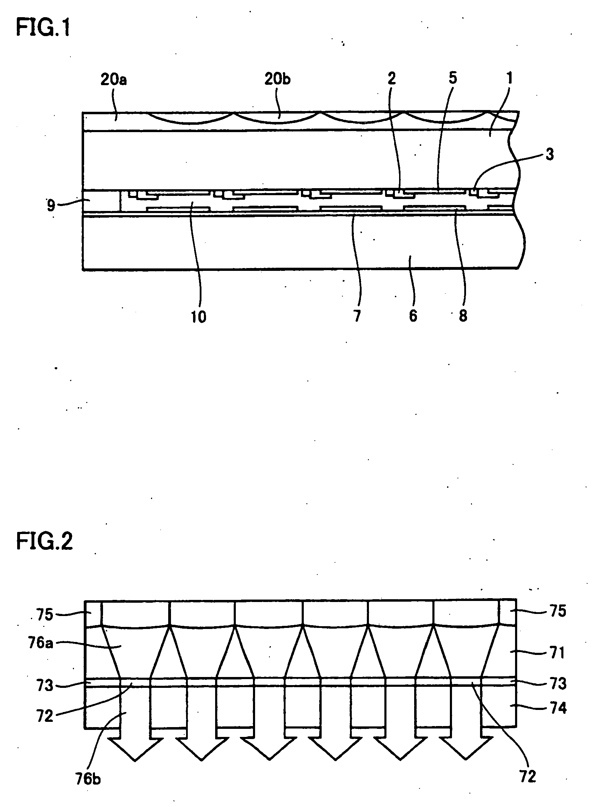

Fig. 1 illustrates a schematic cross section of a liquid crystal display panel according to an embodiment of the present invention. In the liquid crystal display panel according to the present embodiment also, amorphous silicon TFTs 2, drain metal electrodes 3, and transparent pixel electrodes 5 are arranged on first glass substrate 1, similarly as in the case of Fig. 9. A transparent common electrode 7 is provided on an entire surface of second glass substrate 6, which is placed to face first glass substrate 1. On common electrode 7, color filters 8 are disposed in positions corresponding to pixel electrodes 5. Color filters 8 include red, green and blue filters, and these three color filters are arranged periodically. Liquid crystal layer 10 is inserted between first and second glass substrates 1 and 6 facing each other, and the periphery thereof is sealed with epoxy resin 9.

In the liquid crystal display panel of Fig. 1, however, a transparent diamond-like carbon (DLC) layer 20a is deposited on first glass substrate 1, and an array of microlenses 20b is formed in DLC layer 20a. It is noted that the DLC layer is not necessarily formed on the glass substrate of the liquid crystal panel. If desired, it goes without saying that a microlens array formed in a DLC layer deposited on another substrate may be placed to face the glass substrate of the liquid crystal panel.

Fig. 2 illustrates an optical effect of the microlens array in such a liquid crystal panel as shown in Fig. 1, in a schematic cross section. In this drawing, transparent pixel electrodes 72 as well as opaque regions 73 including metal electrode bands, TFTs and others exist on a lower surface of a glass substrate 71. Transparent pixel electrodes 72 and opaque regions 73 are covered with a liquid crystal layer 74. On the other hand, an array of microlenses 75 formed in the DLC layer is placed on an upper surface of glass substrate 71.

In the liquid crystal panel of Fig. 2, a ray of backlight applied from above the array of microlenses 75 is made into a convergent ray 76a by microlens 75 and is converged toward transparent pixel electrode 72. The ray having passed through transparent pixel electrode 72 appears as transmitted light 76b through liquid crystal layer 74 and serves as display light. In other words, the rays that would advance straight to opaque region 73 and be lost in the case of no microlens 75 can effectively be utilized as display light by the effect of microlenses 75, whereby making it possible to improve display brightness of the liquid crystal panel.

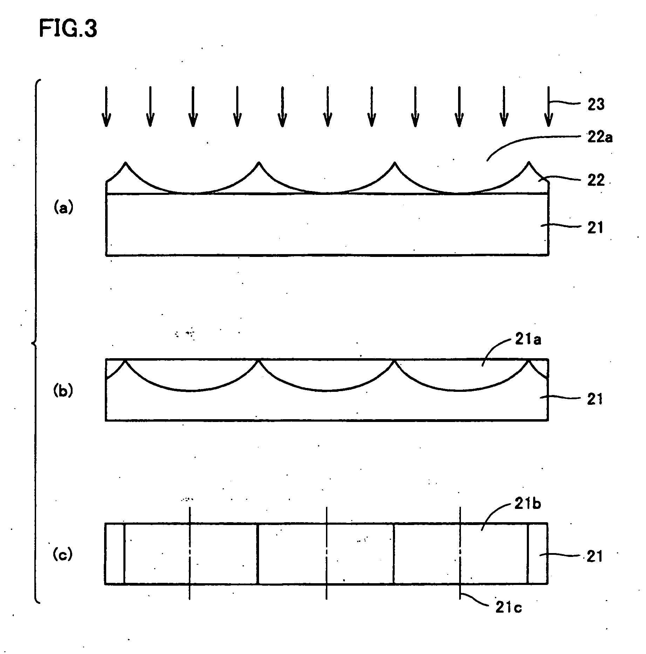

Fig. 3 illustrates a method of fabricating a refraction-type microlens array by using a DLC film, in schematic cross sections.

In Fig. 3(a), a mask layer 22 is formed on a DLC film 21. For mask layer 22, it is possible to use various types of materials having a function of limiting transmission of an energy beam 23. For example, the material for the mask layer can be selected from gold, chromium, nickel, aluminum, tungsten and the like, such that it can be optimized depending on a designed transmission amount of the energy beam relative to the mask layer. Mask layer 22 has minute concave portions 22a arranged in an array. Each of concave portions 22a has a bottom surface made of a part of an approximately spherical surface or a part of an approximately cylindrical surface (the central axis of the cylindrical surface is orthogonal to the paper plane of the drawing). Through mask layer 22 including the array of concave portions 22a, energy beam 23 is applied to DLC film 21.

In Fig. 3(b), mask layer 22 is removed after the application of energy beam 23, thereby obtaining a microlens array 21 a formed in DLC film 21. Specifically, an array of high refractive index regions 21 a is formed in DLC film 21 by the application of energy beam 23, corresponding to the array of concave portions 22a in mask layer 22. At this time, each of concave portions 22a in mask layer 22 has a bottom surface made of a spherical or cylindrical surface, and thus the thickness of the mask layer increases from the center toward the periphery of each of concave portions 21a. In other words, energy beam 23 is more likely to pass through the central part than the peripheral part of each of concave portions 22a. Therefore, high refractive index region 21 a has a shape of a spherical or cylindrical convex lens where the depth in its central part is large while the depth in its peripheral part is small. Accordingly, each of high refractive index regions 21a can serve as a single microlens, as it is.

When a microlens array is fabricated by energy beam 23 as shown in Fig. 3(a), it is possible to adjust the thickness and thus the focal distance of microlenses 21 a in Fig. 3(b), by adjusting the depth of concave portions 22a made of an approximately spherical or cylindrical surface. Even when the depth of concave portions 22a is not modified, it is also possible to adjust the focal distance of microlenses 21 a by modifying transmission power of energy beam 23 to be applied. For example, when an He ion beam is used as energy beam 23, it is possible to decrease the focal distance of microlenses 21a by increasing acceleration energy of the ions, i.e., increasing transmission power of the ions. Furthermore, a higher dose rate of energy beam 23 into the DLC film causes a larger refractive index variation $\Delta n$, and thus it is also possible to adjust the focal distance of microlenses 21a by adjusting the dose rate.

Fig. 3(c) shows another form of a microlens array in a schematic cross section. A microlens 21b has a cylindrical or band-like region penetrating DLC film 21. When microlens 21b is cylindrical, a central axis 21 c thereof is parallel to a thickness direction of DLC film 21, and the refractive index is set to be higher as closer to central axis 21c. When microlens 21b is band-like, a plane 21c extending through the center of its width (orthogonal to the paper plane of the drawing) is parallel to the thickness direction of DLC film 21, and the refractive index is set to be higher as closer to center plane 21c.

The microlens array of Fig. 3(c) can also be formed by a method similar to that of Fig. 3(a). In other words, by applying high-energy beam 23 that can penetrate a thin region of mask layer 22 and DLC film 21, the energy beam is applied at a higher dose rate in a region closer to center line or center plane 21c so that the refractive index in the central region is increased higher.

With various methods, it is possible to fabricate mask layer 22 including concave portions 22a each having a bottom surface made of an approximately spherical or cylindrical surface as shown in Fig. 3(a). For example, mask layer 22 having a uniform thickness is formed on DLC film 21 to form thereon a resist layer having minute holes arranged in an array or linear openings arranged in parallel with each other. By performing isotropic etching through the minute holes or linear openings in the resist layer, it is possible to form approximately hemispherical or approximately half-cylindrical concave portions 22a in mask layer 22 under the minute holes.

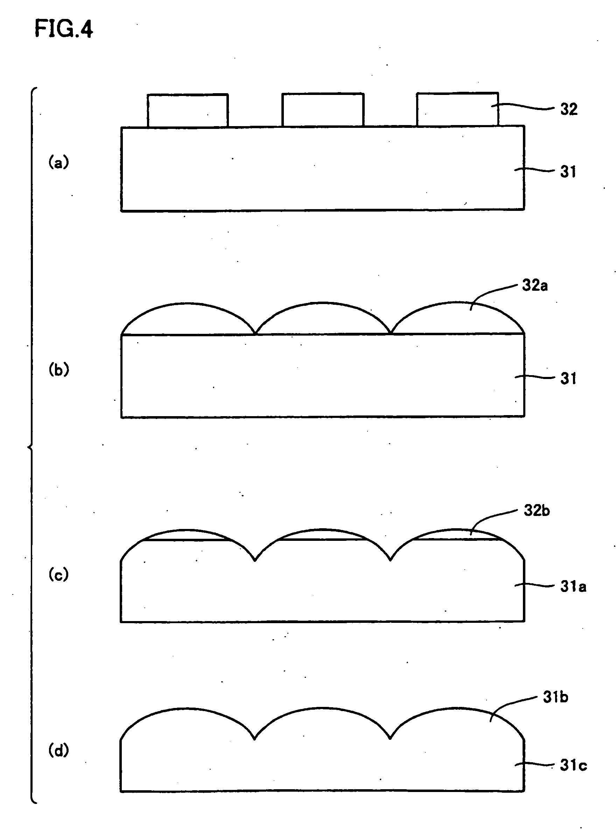

Mask layer 22 including concave portions 22a each having a bottom surface made of an approximately spherical or cylindrical surface as shown in Fig. 3(a) can also be fabricated easily with use of a stamping die that can be fabricated by a method as illustrated in schematic cross sections in Fig. 4.

In Fig. 4(a), a resist pattern 32 is formed on a silica substrate 31, for example. Resist pattern 32 is formed on a plurality of minute circular areas arranged in an array on substrate 31, or a plurality of thin band-like areas arranged in parallel with each other on substrate 31.

In Fig. 4(b), resist pattern 32 is heated and melted. Resist 32 melted on each of the minute circular or thin band-like areas turns into a convex lens shape 32a made of an approximately spherical or cylindrical surface, owing to its surface tension.

In Fig. 4(c), when silica substrate 31a as well as an approximately convex lens shape resist 32b is subjected to RIE, silica substrate 31a is etched while the diameter or width of resist 32b is decreased by the RIE.

As a result, as shown in Fig. 4(d), there is eventually obtained a silica stamping die 31c where convex portions 31b each made of an approximately spherical or cylindrical surface are arranged thereon. It is possible to adjust the height of convex portions 31b by adjusting the ratio between the etching rate of resist 32b and the etching rate of silica substrate 31a in Fig. 4(c).

Stamping die 31c obtained as such can preferably be used in fabrication of mask layer 22 including concave portions 22a as shown in Fig. 3(a). Specifically, if mask layer 22 is formed of gold material, for example, gold is excellent in ductility, and thus gold mask layer 22 is stamped with stamping die 31c so that concave portions 22a can easily be formed. In addition, when stamping die 31c is once fabricated, it can be used repeatedly, which makes it possible to form concave portions 22a in an easier manner and at a lower cost than in the case that concave portions 22a are formed in mask layer 22 by etching.

In the case of the refraction-type microlens array using the DLC film as in the present invention, it is possible to form lenses having a higher refractive index by application of an energy beam, as compared with in the case of using a conventional glass substrate. It is therefore possible to form a refraction-type microlens array in a DLC film much thinner than a glass substrate. However, even in the case of the refraction-type microlens using the DLC film, it requires a thicker DLC film having a thickness of approximately 10 $\mu$m to 20 $\mu$m more, compared with a DLC film required for a diffraction-type microlens described below.

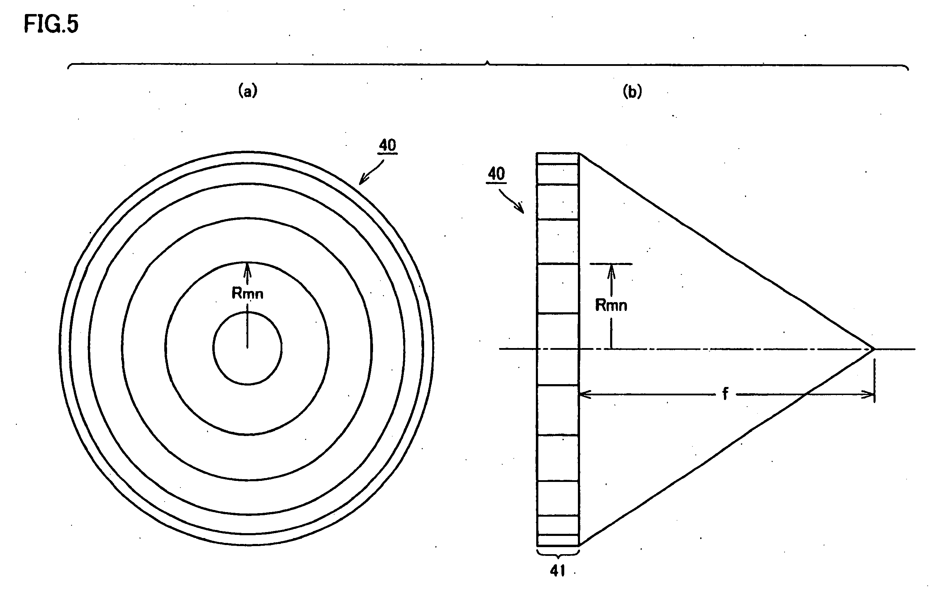

Figs. 5(a) and 5(b) illustrate a diffraction-type microlens formed with use of the DLC film, in a schematic plan view and a schematic cross section, respectively. The diffraction-type microlens can be fabricated to be thinner than the refraction-type microlens, and thus can be fabricated in a thin DLC film having a thickness of approximately 1-2 $\mu$m. A diffraction-type microlens 40 includes a plurality of concentric band-like ring regions Rmn. Here, a character Rmn represents the n-th band-like ring region in the m-th ring zone, and also represents a radius from the center of the concentric circles to the outer periphery of that band-like ring region. Band-like ring regions Rmn have smaller widths as they are placed farther from the center of the concentric circles.

Band-like ring regions Rmn adjacent to each other have refractive indices different from each other. If the diffraction-type microlens of Fig. 5 is a two-level diffraction-type lens, it includes "m" ring zones each including "n" band-like ring regions, where m = 3 and n = 2. In the same ring zone, the inner band-like ring region has a higher refractive index than the outer band-like ring region has.

As inferred from this, a four-level diffraction-type lens has ring zones each including n band-like ring regions, where n = 4. In this case also, in the same ring zone, the band-like ring regions closer to the center of the concentric circles have higher refractive indices. Specifically, four-level refractive index variations are formed from the inner peripheral side to the outer peripheral side in a single ring zone. Such four-level refractive index variations are repeated periodically m times corresponding to the m ring zones.

An outer peripheral radius of band-like ring region Rmn can be set according to an expression (1) below deduced from a diffraction theory including scalar approximation. In expression (1), L represents a diffraction level of a lens, $\lambda$ represents a wavelength of light, and f represents a focal distance of the lens. The largest refractive index variation $\Delta n$ must be such that it can produce the largest phase modulation amplitude $\Delta\phi = 2\pi$ (L-1)/L

[Expression 1]

$$Rmn = \sqrt{\frac{2\,mnf\,\lambda}{L} + \left(\frac{mn\,\lambda}{L}\right)^2} \qquad (1)$$

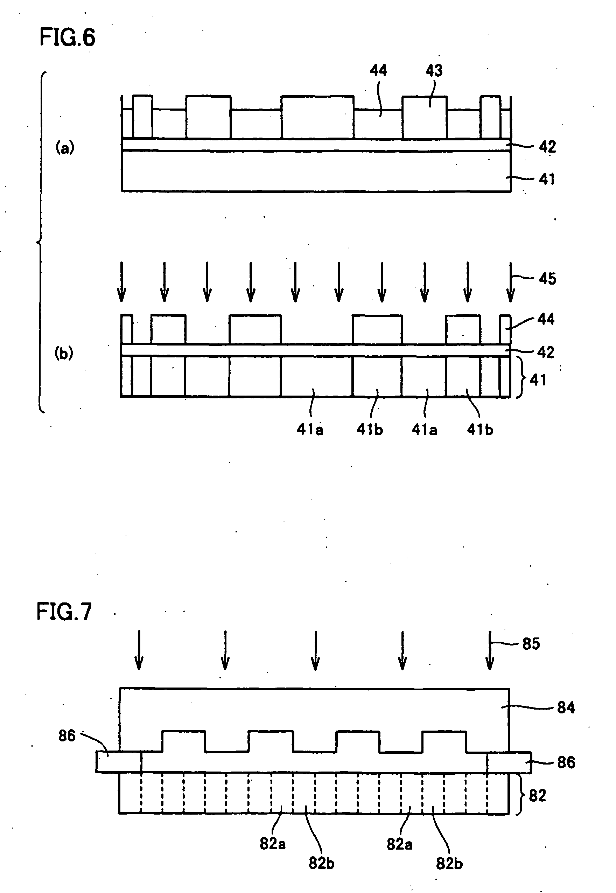

Fig. 6 illustrates an example of a method of fabricating a two-level diffraction-type microlens as shown in Fig. 5, in schematic cross sections.

In Fig. 6(a), an Ni conductive layer 42, for example, is formed on a DLC film 41 by a well-known electron beam (EB) evaporation method. On Ni conductive layer 42, a resist pattern 43 is formed to cover band-like ring regions Rmn (m = 1-3) corresponding to n = 1 in Fig. 5. A gold mask pattern 44 is formed in every opening of resist pattern 43 by electroplating.

In Fig. 6(b), resist pattern 43 is removed so that gold mask pattern 44 is left. Through every opening of gold mask 44, an energy beam 45 is applied to DLC film 41. As a result, band-like ring regions Rm1 irradiated with energy beam 45 have an increased refractive index, while band-like ring regions Rm2 masked from energy beam 45 maintain an original refractive index of the DLC film. Specifically, there is obtained a two-level diffraction-type microlens as shown in Fig. 5. The gold mask pattern after the application of energy beam is immersed in a cyanogen-based etching liquid at a room temperature for a few minutes so that it is dissolved and removed.

Although a mask layer is formed on each DLC film in the example of Fig. 6, the DLC film may be irradiated with an energy beam by using an independent mask in which opening and shielding portions of the independent mask as shown in Fig. 13(a) are reversed. Furthermore, it will be understood that the DLC film may further be irradiated with the energy beam by using another independent mask in which opening and shielding portions of the independent mask as shown in Fig. 13(b) are reversed, whereby it is possible to form a four-level diffraction-type microlens. In this case, it will also be understood that the method of forming the diffraction-type microlens by applying the energy beam to the DLC film is significantly simpler than the method of fabricating the relief-type microlens illustrated in Fig. 12.

Furthermore, it is also possible to fabricate a multi-level diffraction-type microlens through single-time application of an energy beam, by stamping a gold mask layer on a DLC film with a stamping die having such a shape as shown in Fig. 12(f) rather than Fig. 4(d), and applying the energy beam through the stamped gold mask layer.

Furthermore, although a diffraction-type microlens corresponding to a spherical convex lens of a refractive type has been described in the above embodiment, it will be understood that the present invention can also be applied to a diffraction-type microlens corresponding to a cylindrical convex lens of a refractive-type. In such a case, a plurality of band-like regions parallel with each other, with their refractive indices modulated, may be formed instead of the plurality of concentric band-like ring regions with their refractive indices modulated. In this case, in the cross section of Fig. 5(b) for example, the plurality of band-like regions parallel with each other with their refractive indices modulated extend orthogonally to the paper plane of the drawing. In that case, gold mask 44 in Fig. 6(b) may extend orthogonally to the paper plane of the drawing.

Fig. 7 illustrates a method of fabricating a diffraction-type microlens by using a DLC film in a further embodiment of the present invention, in a schematic cross section. In this embodiment, there can be fabricated a diffraction-type microlens corresponding to a columnar convex lens of a refractive type. In Fig. 7, for simplicity and clarity of the drawing, a relief-type phase grating mask (diffraction grating) made of glass is shown to have its grating pitch made constant.

In the fabrication method of Fig. 7, a relief-type phase grating mask 84 made of glass is placed adjacently to a DLC film 82 with a spacer 86 of, e.g., 100 $\mu$m thickness therebetween. In this state, KrF laser light 85 (having a wavelength of 248 nm) can be applied at an energy density of 16 mw/mm$^2$ for one hour, for example, to thereby fabricate a diffraction-type microlens. At this time, a region 82b is increased in refractive index, which is exposed to interference light caused by the +1 st order diffracted light and the -1st order diffracted light from phase grating mask 84. In contrast, a region 82a not exposed to the interference light maintains a refractive index in the film as deposited.

In this case, the interference light rays caused by the +1st order diffracted light and the -1st order diffracted light appear in half the cycle of concavity and convexity of relief-type phase grating mask 84. Accordingly, it is possible to use relief-type phase grating mask 84 formed to have its concavity and convexity cycle twice as wide as a desired cycle of high refractive index regions 82b in the DLC film. In addition, the strength of the interference light is increased as closer to the center of the width of high refractive index region 82b. In DLC film 82, therefore, the refractive index is successively varied in the vicinity of the interface between low refractive index region 82a and high refractive index region 82b, whereby making it possible to obtain a high diffraction efficiency. If desired, it is also possible to use an amplitude-type phase grating mask obtained by patterning of a chromium film, a chromium oxide film, an aluminum film, or the like, instead of using relief-type phase grating mask 84.

In the method of fabricating the diffraction-type microlens in Fig. 7, there is illustrated the case where the border region between the high and low refractive index regions is parallel to the film thickness direction. If desired, however, the border region may be tilted with respect to the film thickness direction. To this end, in the fabrication method in Fig. 7, ultraviolet light 85 may be made incident in an oblique direction with respect to a DLC film surface, so as to utilize exposure to interference light caused by the 0th order diffracted light and the +1st order diffracted light or the -1st order diffracted light. However, it is noted that the interference light rays caused by the 0th order diffracted light and the +1st order diffracted light or the -1st order diffracted light appear in cycles identical to the concavity and convexity cycles of phase grating mask 84. Accordingly, it is necessary to use phase grating mask 84 formed with concavities and convexities having cycles identical to desired cycles of high refractive index regions 82b in the DLC film.

As described above, by applying the microlens array of the DLC film, which can be fabricated according to the present invention, to the liquid crystal display panel in Fig. 1, it is possible to provide a liquid crystal display panel having its improved display brightness, in a simple manner and at a low cost. It goes without saying that the microlens array of the DLC film can be applied not only to the liquid crystal display panel but also to the electrochromic display panel as shown in Fig. 10, and it will be understood that it can also be applied to any other transmission-type display panel.

**Industrial Applicability**

As described above, according to the present invention, it is possible to fabricate a mechanically and thermally stable microlens array of a flat plate type in a simple manner and at a low cost, and it is also possible to provide a transmission-type display panel including such a microlens array and having its sufficiently improved display brightness, in a simple manner and at a low cost. If the present invention is to be applied to a liquid crystal panel, such a liquid crystal panel can be applied to a television, a personal computer, a mobile telephone, a personal digital assistant (PDA), a light valve for a liquid crystal projector, or the like. In addition, the microlens array according to the present invention can also be applied for improving the light receiving efficiency in a light receiving device formed of a charge coupled device (CCD), a complementary metal oxide semiconductor (CMOS), or the like.

**EP 1 801 636 B1**

**Claims**

1. A transmission-type display panel comprising: a plurality of transparency control regions (5; 10) arranged in an array; a non-transparent border region (2, 3) existing around each of said transparency control regions; and a microlens array including a plurality of microlenses (20b, 21a, 21c, 40) arranged in an array so as to correspond to said plurality of transparency control regions, wherein
each of said microlenses serves to converge incident light, which is about to advance straight to the non-transparent border region, into corresponding one of said transparency control regions, **characterized in that** said panel comprises a substrate and said microlens array comprises a transparent diamond-like carbon (DLC) film (20a, 21, 41, 82), deposited on said substrate (1, 71), wherein said DLC film includes regions, (20b, 21a, 21b, 41a, 82b) each said region having its refractive index modulated to form a respective one of said microlenses, and wherein said microlens array produces a light convergence effect when light flux passes through the regions having the modulated refractive index.

2. The transmission-type display panel according to claim 1, wherein a refractive-type lens region (21 a) having a relatively high refractive index is formed corresponding to each of said microlenses on one main surface side of said DLC film (21), and said lens region has a shape of a convex lens surrounded by said one main surface and an interface equivalent to a part of an approximately spherical surface.

3. The transmission-type display panel according to claim 1, wherein a refractive-type lens region (21a) having a relatively high refractive index is formed corresponding to each of said microlenses on one main surface side of said DLC film (21), and said lens region has a shape of a columnar convex lens surrounded by said one main surface and an interface equivalent to a part of an approximately cylindrical surface having a central axis parallel to said main surface.

4. The transmission-type display panel according to claim 1, wherein a refractive-type lens region having a relatively high refractive index is formed corresponding to each of said microlenses (21b) in said DLC film (21), said lens region has an approximately cylindrical shape penetrating said DLC film, the central axis (21c) of said cylindrical shape is orthogonal to said DLC film, and the refractive index is set to be higher as closer to the central axis.

5. The transmission-type display panel according to claim 1, wherein a refractive-type lens region (21b) having a relatively high refractive index is formed corresponding to each of said microlenses in said DLC film (21), said lens region is a band-like region penetrating said DLC film, and the refractive index is set to be higher as closer to a plane (21c) that is orthogonal to said DLC film and extends through the center of a width direction of said band-like region.

6. The transmission-type display panel according to claim 1, wherein said DLC film (41) includes a plurality of band-like ring regions in a manner of concentric circles for each of said microlenses (40), the band-like ring regions have their refractive indices modulated to serve as a diffraction grating, and said band-like ring regions placed farther from the center of said concentric circles are set to have smaller widths.

7. The transmission-type display panel according to claim 6, wherein said DLC film (41) includes "m" concentric ring zones for each of said microlenses (40), each of said ring zones includes "n" said band-like ring regions, inner one of the band-like ring regions has a higher refractive index compared with outer one of the band-like ring regions in each of said ring zones, and the band-like ring regions placed corresponding to each other in different ones of said ring zones have the same refractive index.

8. The transmission-type display panel according to claim 1, wherein said DLC film (82) includes a plurality of band-like regions (82a, 82b) parallel to each other for each of said microlenses, the band-like regions have their refractive indices modulated to serve as a diffraction grating, and said band-like regions placed farther from a prescribed band-like region are set to have smaller widths.

9. The transmission-type display panel according to claim 8, wherein said DLC film (82) includes "m" band zones parallel to each other for each of said microlenses, each of said band zones includes "n" said band-like regions (82a, 82b), the band-like regions placed closer to said prescribed band-like region have higher refractive indices compared with the band-like regions placed farther from said prescribed band-like region in each of said band zones, and the band-like regions placed corresponding to each other in different ones of said band zones have the same refractive index.

**10**

10. The transmission-type display panel according to claim 1, wherein each of said transparency control regions (5, 10) includes a liquid crystal layer or an electrochromic material layer, as a transparency control material layer.

11. The transmission-type display panel according to claim 10, wherein each of said transparency control regions (5, 10) includes said transparency control material layer (10) held on a first main surface side of a glass substrate (1), and said DLC film (20a) is formed on a second main surface of said glass substrate.

12. A method of manufacturing the transmission-type display panel of claim 1, having the steps of:

   depositing said DLC film (20a, 21, 41, 82) on a substrate (1, 71) by plasma CVD,
   forming said microlens array including said plurality of microlenses (20b, 21a, 21c, 40) in said DLC film.
   by modulating the refractive index of regions of said DLC film by application of an energy beam selected from an ultraviolet ray, an X-ray, synchrotron radiation, an ion beam, and an electron beam to increase the refractive index, such that each said region forms a respective one of said microlenses, and
   incorporating said microlens array into the transmission-type display panel.

13. The manufacturing method according to claim 12, wherein a plurality of said microlenses arranged in an array in said DLC film are formed by simultaneous application of said energy beam.

14. A method of manufacturing the transmission-type display panel of claim 8, said method incorporating the steps according to claim 12, wherein a band-like region (82b) having a relatively high refractive index in said DLC film (82) is formed by exposure with ultraviolet light intensity distribution obtained by interference of two types of diffracted lights which have passed through a phase grating mask (84).

**Patentansprüche**

1. Anzeigefeld des Transmissionstyps, bei welchem vorgesehen sind:

   mehrere Lichtdurchlässigkeits-Steuerbereiche (5, 10), die in einem Array angeordnet sind; ein nichttransparenter Randbereich (2, 3), der um jeden der Lichtdurchlässigkeits-Steuerbereiche herum vorgesehen ist; und ein Mikrolinsen-Array, welches mehrere Mikrolinsen (20b, 21a, 21c, 40) aufweist, die so in einem Array angeordnet sind, dass sie den mehreren Lichtdurchlässigkeits-Steuerbereichen entsprechen, wobei
   jede der Mikrolinsen dazu dient, einfallendes Licht zu sammeln, welches dabei ist, sich geradlinig zu dem nichttransparenten Randbereich auszubreiten, in einem entsprechenden der Lichtdurchlässigkeits-Steuerbereiche, **dadurch gekennzeichnet, dass**
   das Mikrolinsenarray ein Substrat und einen Film (20a, 21, 41, 82) aus lichtdurchlässigem, diamantartigem Kohlenstoff (DLC) aufweist, der auf dem Substrate (1, 71) abgelagert ist, wobei der DLC-Film Bereiche (20b, 21a, 21b, 41a, 82b) aufweist, bei jedem der Bereiche dessen Brechungsindex moduliert ist, um eine jeweilige der Mikrolinsen auszubilden, und wobei das Mikrolinsen-Array einen Lichtsammeleffekt erzeugt, wenn ein Lichtfluss durch die Bereiche hindurchgeht, welche den modulierten Brechungsindex aufweisen.

2. Anzeigefeld des Transmissionstyps nach Anspruch 1, bei welchem ein Linsenbereich (21a) des Brechungstyps, der einen relativ hohen Brechungsindex aufweist, entsprechend jeder der Mikrolinsen auf einer Hauptoberflächenseite des DLC-Films (21) vorgesehen ist, und der Linsenbereich die Form einer Konvexlinse aufweist, umgeben von der einen Hauptoberfläche, und einer Grenzfläche entsprechend einem Teil einer annähernd kugelförmigen Oberfläche.

3. Anzeigefeld des Transmissionstyps nach Anspruch 1, bei welchem ein Linsenbereich (21a) des Brechungstyps, der einen relativ hohen Brechungsindex aufweist, entsprechend jeder der Mikrolinsen auf der einen Hauptoberflächenseite des DLC-Films (21) vorgesehen ist, und der Linsenbereich die Form einer säulenförmigen, konvexen Linse aufweist, die von der einen Hauptoberfläche umgeben ist, und von einer Grenzfläche entsprechend einem Teil einer annähernd zylindrischen Oberfläche, die eine Zentrumsachse parallel zu der Hauptoberfläche aufweist.

4. Anzeigefeld des Transmissionstyps nach Anspruch 1, bei welchem ein Linsenbereich des Brechungstyps, der einen relativ hohen Brechungsindex aufweist, entsprechend jeder der Mikrolinsen (21b) in dem DLC-Film (21) vorgesehen ist, der Linsenbereich eine annähernd zylinderförmige Form aufweist, welche in den DLC-Film eindringt, die Zentrumsachse (21c) der zylindrischen Form orthogonal zu dem DLC-Film verläuft, und der Brechungsindex so eingestellt ist, dass er näher zur Zentrumsachse höher ist.

5. Anzeigefeld des Transmissionstyps nach Anspruch 1, bei welchem ein Linsenbereich (21b) des Brechungstyps, der einen relativ hohen Brechungsindex aufweist, entsprechend jeder der Mikrolinsen in dem DLC-Film (21) vorgesehen ist, der Linsenbereich ein bandartiger Bereich ist, welcher in den DLC-Film eindringt, und der Brechungsindex näher an einer Ebene (21c) höher eingestellt ist, die orthogonal zu dem DLC-Film verläuft, und sich durch das Zentrum einer Richtung in der Breite des bandförmigen Bereichs erstreckt.

6. Anzeigefeld des Transmissionstyps nach Anspruch 1, bei welchem der DLC-Film (41) mehrere bandartige Ringbereiche nach Art und Weise konzentrischer Kreise für jede der Mikrolinsen (40) aufweist, bei den bandartigen Ringbereichen deren Brechungsindizes moduliert sind, sodass sie als Beugungsgitter dienen, und die bandartigen Ringbereiche, die weiter entfernt vom Zentrum der konzentrischen Kreise angeordnet sind, so eingestellt sind, dass sie geringere Breiten aufweisen.

7. Anzeigefeld des Transmissionstyps nach Anspruch 6, bei welchem der DLC-Film (41) "m" konzentrische Ringzonen für jede der Mikrolinsen (40) aufweist, jede der Ringzonen "n" der bandartigen Ringbereiche aufweist, ein innerer der bandartigen Ringbereiche einen höheren Brechungsindex im Vergleich zu jenem der bandartigen Ringbereiche in jeder der Ringzonen aufweist, und die bandartigen Ringbereiche, die entsprechend zueinander in unterschiedlichen Ringzonen angeordnet sind, denselben Brechungsindex aufweisen.

8. Anzeigefeld des Transmissionstyps nach Anspruch 1, bei welchem der DLC-Film (82) mehrere bandartige Bereiche (82a, 82b) parallel zueinander für jede der Mikrolinsen aufweist, bei den bandartigen Bereichen deren Brechungsindizes moduliert sind, um als Beugungsgitter zu dienen, und die bandartigen Bereiche, die weiter entfernt von einem vorbestimmten bandartigen Bereich angeordnet sind, so eingestellt sind, dass sie kleinere Breiten aufweisen.

9. Anzeigefeld des Transmissionstyps nach Anspruch 8, bei welchem der DLC-Film (82) "m" Bandzonen parallel zueinander für jede der Mikrolinsen aufweist, jede der Bandzonen "n" der bandartigen Bereiche (82a, 82b) aufweist, die bandartigen Bereiche, die näher an dem vorbestimmten bandartigen Bereich angeordnet sind, höhere Brechungsindizes im Vergleich zu den bandartigen Bereichen aufweisen, die weiter entfernt von dem vorbestimmten bandartigen Bereich in jeder der Bandzonen angeordnet sind, und die bandartigen Bereiche, die entsprechend zueinander in unterschiedlichen der Bandzonen angeordnet sind, den gleichen Brechungsindex aufweisen.

10. Anzeigefeld des Transmissionstyps nach Anspruch 1, bei welchem jeder der Lichtdurchlässigkeits-Steuerbereiche (5, 10) eine Flüssigkristallschicht oder eine Schicht aus elektrochromem Material als Lichtdurchlässigkeits-Steuermaterialschicht aufweist.

11. Anzeigefeld des Transmissionstyps nach Anspruch 10, bei welchem jeder der Lichtdurchlässigkeits-Steuerbereiche (5, 10) die Lichtdurchlässigkeits-Steuermaterialschicht (10) aufweist, die auf einer ersten Hauptoberflächenseite eines Glassubstrats (1) gehalten ist, und der DLC-Film (20a) auf einer zweiten Hauptoberfläche des Glassubstrats vorgesehen ist.

12. Verfahren zur Herstellung Anzeigefeldes des Transmissionstyps nach Anspruch 1, mit folgenden Schritten:

   Ablagern des DLC-Films (20a, 21, 41, 82) auf einem Substrat (1, 71) mittels Plasma-CVD,
   Ausbildung des Mikrolinsen-Arrays, welcher die mehreren Mikrolinsen (20b, 21a, 21c, 40) aufweist, in dem DLC-Film, durch Modulieren des Brechungsindex der Bereiche des DLC-Films durch Anlegen eines Energiestrahls, ausgewählt unter Ultraviolett-Strahlung, Röntgenstrahlung, Synchrotron-Strahlung, einem Ionenstrahl und einem Elektronenstrahl, um den Brechungsindex zu erhöhen, sodass jeder der Bereiche eine jeweilige der Mikrolinsen bildet, und
   Einbauen des Mikrolinsen-Arrays in das Anzeigefeld des Transmissionstyps.

13. Herstellungsverfahren nach Anspruch 12, bei welchem mehrere der Mikrolinsen, die in einem Array in dem DLC-Film angeordnet sind, durch gleichzeitiges Einwirken des Energiestrahls ausgebildet werden.

14. Verfahren zur Herstellung des Anzeigefeldes des Transmissionstyps nach Anspruch 8, wobei das Verfahren die Schritte gemäß Anspruch 12 aufweist, wobei ein bandartiger Bereich (82b), der einen relativ hohen Brechungsindex in dem DLC-Film (82) aufweist, durch Belichtung mit einer Ultraviolettlicht-Intensitätsverteilung ausgebildet wird, die durch Interferenz zweier Arten gebeugten Lichtes erhalten wird, die durch eine Phasengittermaske (84) hindurchgegangen sind.

**Revendications**

1. Écran de type transmissif comprenant : une pluralité de régions de contrôle de transparence (5, 10) agencées en un réseau ; une région de bordure non transparente (2, 3) existant autour de chacune desdites régions de contrôle de transparence ; et un réseau de microlentilles comprenant une pluralité de microlentilles (20b, 21a, 21c, 40) agencées en un réseau de façon à correspondre à ladite pluralité de régions de contrôle de transparence, dans lequel chacune desdites microlentilles sert à faire converger la lumière incidente, qui est sur le point d'avancer directement vers la région de bordure non transparente, dans une région correspondante desdites régions de contrôle de transparence, **caractérisé en ce que**
ledit écran comprend un substrat et ledit réseau de microlentilles comprend un film de carbone sous forme de diamant amorphe (DLC) transparent (20a, 21, 41, 82), déposé sur ledit substrat (1, 71), dans lequel ledit film DLC comprend des régions (20b, 21a, 21b, 41a, 82b), chaque dite région ayant son indice de réfraction modulé pour former une microlentille respective desdites microlentilles, et dans lequel ledit réseau de microlentilles produit un effet de convergence de la lumière lorsque le flux lumineux passe à travers les régions ayant l'indice de réfraction modulé.

2. Écran de type transmissif selon la revendication 1, dans lequel une région de lentille de type réfractif (21a) ayant un indice de réfraction relativement élevé est formée en correspondance avec chacune desdites microlentilles sur un côté d'une surface principale dudit film DLC (21), et ladite région de lentille a une forme de lentille convexe entourée par ladite une surface principale et une interface équivalente à une partie d'une surface sensiblement sphérique.

3. Écran de type transmissif selon la revendication 1, dans lequel une région de lentille de type réfractif (21a) ayant un indice de réfraction relativement élevé est formée en correspondance avec chacune desdites microlentilles sur un côté d'une surface principale dudit film DLC (21), et ladite région de lentille a une forme de lentille convexe colonnaire entourée par ladite une surface principale et une interface équivalente à une partie d'une surface sensiblement cylindrique ayant un axe central parallèle à ladite surface principale.

4. Écran de type transmissif selon la revendication 1, dans lequel une région de lentille de type réfractif ayant un indice de réfraction relativement élevé est formée en correspondance avec chacune desdites microlentilles (21b) dans ledit film DLC (21), ladite région de lentille a une forme sensiblement cylindrique pénétrant dans ledit film DLC, l'axe central (21c) de ladite forme cylindrique est orthogonal audit film DLC, et l'indice de réfraction est prévu pour être plus élevé à mesure que l'on se rapproche de l'axe central.

5. Écran de type transmissif selon la revendication 1, dans lequel une région de lentille de type réfractif (21b) ayant un indice de réfraction relativement élevé est formée en correspondance avec chacune desdites microlentilles dans ledit film DLC (21), ladite région de lentille est une région en forme de bande pénétrant dans ledit film DLC, et l'indice de réfraction est prévu pour être plus élevé à mesure que l'on se rapproche d'un plan (21c) qui est orthogonal audit film DLC et s'étend à travers le centre d'une direction de largeur de ladite région en forme de bande.

6. Écran de type transmissif selon la revendication 1, dans lequel ledit film DLC (41) comprend une pluralité de régions annulaires en forme de bande sous forme de cercles concentriques pour chacune desdites microlentilles (40), les régions annulaires en forme de bande ont leurs indices de réfraction modulés pour servir de réseau de diffraction, et lesdites régions annulaires en forme de bande placées plus loin du centre desdits cercles concentriques sont prévues pour avoir des largeurs plus petites.

7. Écran de type transmissif selon la revendication 6, dans lequel ledit film DLC (41) comprend « m » zones annulaires concentriques pour chacune desdites microlentilles (40), chacune desdites zones annulaires comprend « n » dites régions annulaires en forme de bande, la région intérieure des régions annulaires en forme de bande a un indice de réfraction plus élevé par rapport à la région extérieure des régions annulaires en forme de bande dans chacune desdites zones annulaires, et les régions annulaires en forme de bande placées en correspondance les unes avec les autres dans des zones différentes desdites zones annulaires ont le même indice de réfraction.

8. Écran de type transmissif selon la revendication 1, dans lequel ledit film DLC (82) comprend une pluralité de régions en forme de bande (82a, 82b) parallèles les unes aux autres pour chacune desdites microlentilles, les régions en forme de bande ont leurs indices de réfraction modulés pour servir de réseau de diffraction, et lesdites régions en forme de bande placées plus loin d'une région en forme de bande prescrite sont prévues pour avoir des largeurs plus petites.

9. Écran de type transmissif selon la revendication 8, dans lequel ledit film DLC (82) comprend « m » zones de bande parallèles les unes aux autres pour chacune desdites microlentilles, chacune desdites zones de bande comprend « n » dites régions en forme de bande (82a, 82b), les régions en forme de bande placées plus près de ladite région en forme de bande prescrite ont des indices de réfraction plus élevés par rapport aux régions en forme de bande placées plus loin de ladite région en forme de bande prescrite dans chacune desdites zones de bande, et les régions en forme de bande placées en correspondance les unes avec les autres dans des zones différentes desdites zones de bande ont le même indice de réfraction.

10. Écran de type transmissif selon la revendication 1, dans lequel chacune desdites régions de contrôle de transparence (5, 10) comprend une couche de cristaux liquides ou une couche de matériau électrochrome, en tant que couche de matériau de contrôle de transparence.

11. Écran de type transmissif selon la revendication 10, dans lequel chacune desdites régions de contrôle de transparence (5, 10) comprend ladite couche de matériau de contrôle de transparence (10) maintenue sur un côté de première surface principale d'un substrat de verre (1), et ledit film DLC (20a) est formé sur une seconde surface principale dudit substrat de verre.

12. Procédé de fabrication de l'écran de type transmissif selon la revendication 1, ayant les étapes consistant à :

déposer ledit film DLC (20a, 21, 41, 82) sur un substrat (1, 71) par dépôt chimique en phase vapeur par plasma, former ledit réseau de microlentilles comprenant ladite pluralité de microlentilles (20b, 21a, 21c, 40) dans ledit film DLC en modulant l'indice de réfraction des régions dudit film DLC par l'application d'un faisceau d'énergie sélectionné parmi un rayon ultraviolet, un rayon X, un rayonnement synchrotron, un faisceau d'ions et un faisceau électronique pour accroître l'indice de réfraction de sorte que chacune desdites régions forme une microlentille respective desdites microlentilles, et incorporer ledit réseau de microlentilles dans l'écran de type transmissif.

13. Procédé de fabrication selon la revendication 12, dans lequel une pluralité desdites microlentilles agencées en un réseau dans ledit film DLC sont formées par l'application simultanée dudit faisceau d'énergie.

14. Procédé de fabrication de l'écran de type transmissif selon la revendication 8, ledit procédé intégrant les étapes selon la revendication 12, dans lequel une région en forme de bande (82b) ayant un indice de réfraction relativement élevé dans ledit film DLC (82) est formée par une exposition avec une distribution d'intensité de lumière ultraviolette obtenue par l'interférence de deux types de lumières diffractées qui sont passées à travers un masque de réseau de phase (84).

FIG.1

FIG.2

FIG.3

(a)

(b)

(c)

23
22a
22
21

21a
21

21b
21
21c

## FIG.4

(a)

32

31

(b)

32a

31

(c)

32b

31a

(d)

31b

31c

# FIG.5

(a)

(b)

40

40

Rmn

Rmn

f

41

## FIG.6

(a)

44  43
42
41

(b)

45
44
42
41

41a  41b  41a  41b

## FIG.7

85
84
86
86
82

82a  82a
82b  82b

FIG.8

FIG.9

## FIG.10

## FIG.11

# FIG.12

(a)

~14a

}13

12

11

(b)

14b

12a

11

(c)

11a

(d)

14c

}16

15

11a

(e)

14d

15a

11a

(f)

11b

FIG.13

(a) — 13

(b) — 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60165621 A
- EP 0516479 A2
- EP 0615150 A2
- JP 60123803 A

**Non-patent literature cited in the description**

- Technique of Ultraprecision Machining and Mass Production of Microlens (Array. TECHNICAL INFORMATION INSTITUTE CO, LTD, 28 April 2003, 20-2071-81
- Technique of Ultraprecision Machining and Mass Production of Microlens (Array. TECHNICAL INFORMATION INSTITUTE CO, LTD, 28 April 2003, 20-2171-81
- **G. F. ZHANG et al.** Studies on diamondlike carbon films for antireflection coatings of infrared optical materials. *journal of applied physics,* 15 July 1994, vol. 76 (2
- **DAVID P. HAMBLEN.** Diffractive Optics: The gradial zone lens. *2412 Optics Letter,* 01 November 1994, vol. 19